# EUROPEAN PATENT APPLICATION

(11) **EP 4 356 866 A1**
(43) Date of publication of application: **24.04.2024**
(21) Application number: 22207883.4
(22) Date of filing: 16.11.2022
(51) Int. Cl.: A61C 1/14, A61C 17/20, A61C 3/03

(54) **A TIP HOLDER, A TOOL TIP AND A MEDICAL TOOL**

(30) Priority: 21.10.2022 EP 22203107
(71) Applicant: Ferton Holding S.A., 2800 Delémont (CH)
(72) Inventor: Bienaimé, Alex, 39220 Les Rousses (FR)
(74) Representative: Müller Schupfner & Partner Patent- und Rechtsanwaltspartnerschaft mbB

(57) **Abstract**

A tip holder for holding a medical tool tip (20) for cleaning an implant, the tip holder comprising
- a moving part (10) extending between a first interface section (15) and a second interface section (15'), the moving part (10) being configured to perform a vibration movement, along a vibration direction (VD) in a vibration state, when attached to a handpiece (40),
wherein the first interface section (15) is configured to secure a tool tip (20) by frictional connection and
wherein the second interface section (15') is configured to attach the tool (1) to the handpiece (40) having a vibration source (30) emitting vibration in a vibrating mode.

## Description

The present invention concerns a tip holder for holding a medical tool tip, a tool tip and a medical tool.

Particularly, the present invention concerns a tool for cleaning an implant or a surface of a tooth, wherein the tool performs a vibration movement such as an oscillating movement during its operation.

Ultrasonic scaling instruments are well known, for example, to remove hard contaminations due to their power of ultrasonic vibrations. It is a high developed and well established technique being based on piezo-element, which causes the ultrasonic oscillation. Thereby a tool tip, for example a scaler tip in case of a dental treatment, is typically designed as an interchangeable element, which can be screwed to a moving part that performs vibration movements along a vibration direction. Thereby, the tool tips of the prior art generally include a screwing section that extends in the mounted state along the vibration direction and is located at a proximal end of the scaler tip, the proximal end being the opposite end to the distal pointed tip of the scaler. The ultrasonic scaler technique allows removing attachments, which are firmly adhered to a surface, in a simple manner.

Typically those scaler tips are made from metal and have a complex curved shape. Since the scaler tips a made from metal and have a pointed tip, they usually cannot be used for cleaning implants, since they could damage the implant.

It was an object of the present invention to provide a tool, which can withstand the forces being generated during the treatment. Further, it was an object to provide a tool, which is suitable to clean implants without damaging them and to use the developments and benefits, which are known from ultrasonic scalers of the prior art.

This object is achieved by a tip holder according to claim 1, a tool tip according to claim 9, and a medical tool according to claim 11. Preferred embodiments are incorporated in the dependent claims, the description and the figures.

According to a first aspect of the present invention a tip holder for holding a medical tool tip for cleaning an implant or a tooth, is provided, the tip holder comprising
- a moving part, extending between a first interface section and a second interface section, the moving part being configured to perform a vibration movement, along a vibration direction in a vibration state, when attached to a handpiece ,
   wherein the first interface section is configured to secure a tool tip by frictional connection and
   wherein the second interface section is configured to attach the tool to the handpiece having a vibration source emitting vibration in a vibrating mode.

Contrary to the prior art, the tip holder comprises a first interface section and a second interface section. It turned out that the first interface section and the second interface section, as described, are suitable to transfer the vibrational movement, being realized by the vibration source, to the tool tip in a comparably effective way, especially without creating parasitic effects, uncontrolled movements of the tool tip and vibrational losses. Furthermore, it turned out that the tip holder allows a stable and loadable connection between the handpiece and the tool tip, the tip holder forming an adapter between the handpiece and the tool tip. This stable connection is especially of advantage, when the tool tip interacts with a treatment zone, being treated by the medical tool during operation. In particular, the interaction is caused by hitting the tool tip, especially the tip portion of the tool tip, to a surface while its vibrational movement. As a result, back reflections are experienced by the tool tip and in particular by the tip holder. Preferably, the medical tool is used for cleaning an implant or cleaning a surface of a tooth, especially for removing calculus or biofilms. For example, the medical tool is a scaler.

According to a preferred embodiment, the second interface section comprises a thread being configured to screw the tip holder to the handpiece. As a result, a rigid connection to the hand piece is realized. Preferably, the second interface section is configured to screw the handpiece along the vibration direction.

In particular, it is provided that the first interface section forms a cylinder-like or ball- like section, comprising a recess for accommodating a tool tip. Especially, it turned out that it is easy to manufacture a cylinder-like shaped section and the ball-like section supports a comfortable treatment of the patient.

According to another preferred embodiment, it is provided that the moving part comprises a fluid channel configured to deliver a stream of fluid from the handpiece to the tool tip. As a result, it is possible to direct a liquid stream to the treatment zone, especially in cases, in which the medical tool is intended to remove material from the surface being treated. Especially, the liquid, for example water, suppresses a dust formation in the treatment zone.

Preferably, it is provided that the moving part forms a shaft for the fluid channel, being located along the axis of the shaft. Preferably, it is provided that the fluid channel comprises a fluid outlet located in the first interface section. As a result, it is possible to eject the liquid directly adjacent to the tool tip, which treats the treatment zone.

Preferably, it is provided that the first interface section is configured to attach the tool tip in a slanted direction with respect to the vibration direction. As a result, an optimized orientation of the tool tip is realized for removing the attachments of the treated surface.

According to another aspect of the present invention, a tool tip is provided, the tool tip comprising a tip portion and an attachment portion being configured to frictionally secure the connection into the first interface section of a tip holder according to the present invention. Preferably, it is provided that the tool tip is made at least partially from plastic, preferably made from at least partially a peek polymer. Especially, it turned out that it is possible to use a plastic tool tip for cleaning an implant without damaging the teeth. All the benefits and specifications mentioned in the context of the tool tip apply analogously to the tool medical and vice versa.

According to another aspect of the present invention, a medical tool is provided, comprising a tip holder according to the present invention and a tool tip according to the present invention, wherein the attachment portion is secured into the first interface section by frictional connection. Preferably, a press fit connection is realized. All the benefits and specifications mentioned in the context of the tip holder and the tool tip apply analogously to the tool medical and vice versa.

According to a second aspect of the present invention a tool for cleaning an implant is provided, comprising the tip holder according to the invention and the tool tip being connected to the moving part in an first interface section at least in the operating state, wherein the tool tip is made at least partially from plastic, preferably at least partially or completely made of a Peek polymer, and is non-bent, at least in a non-operating state, i. e. the tool tip is free of a bent or an arc-like section. Preferably, the tool further comprises the handpiece having the vibration source, in particular an ultrasound vibration source, i. e. a vibration source that causes an ultrasound vibration. All the benefits and specifications mentioned in the context of the tool holder, the tool tip and the tool apply analogously to the tool and vice versa.

Contrary to the prior art, it is provided that the tool tip is made from plastic. As a result, it is possible to use the tool as an ultrasonic device for cleaning an implant. Furthermore, it turned out that using a non-bent tool tip allows a vibrational motion of the tool tip during operation. Contrary to this, a bent tool tip, which mainly corresponds to a standard design in case of an ultrasonic scaler, cannot realize a reasonable vibration at the pointed tip, suitable to remove adhered attachments from implants, when it is made from a plastic. In other words: it turned out that the specific combination of using a tool tip made from plastic and of using a non-bent course of the tool tip allows providing a tool, which generates an oscillation movement, being suitable to remove adhered attachments and/or dirt from implants without risking a damage at the implant. Actually, it turned out that the vibrational properties and an impedance of the plastic tool tip having the non-bent shape are significantly improved compared to those plastic tool tips having a classical scaler shape, which cannot be used for cleaning implants.

For example, the tool tip is formed needle-like and/or has a straight general course. Preferably, the tool tip has a mainly straight course along its whole extension, at least over 75% of its whole extension. In particular the tool tip avoids a curved or arced section. Preferably, the moving part extends straight along the vibration direction, i. e. is free of a bent or an arc-like section, too. Thus, a bent section at the end of the moving part is avoided.

The tool tip is preferably formed completely from plastic or the tool tip is made at least partially from plastic. In particular the tool tip is made as a single component.

Preferably, the tool is a tool to perform a surface treatment to remove adhered attachments and/or colourations at the outer side of an implant. Preferably, the tool tip is located during operation next or close to the implant for removing attachments being adhered to a surface of an implant. For example, the vibration source, in particular the ultrasound vibration source, causing the vibration motion of the moving part, comprises a piezo element that causes a flexural motion of the moving part along the vibration direction. Preferably, the vibration source effects an ultrasound movement that causes an efficient and harmless way for removing attachments at the outer side of the implant without damaging the implant.

Preferably, the tool tip extends in an extending direction being slanted to the vibration direction in the first interface section in a non-vibration state. As a consequence the tool tip is connected to the moving part such that the extending direction of the tool tip is slanted relative to the moving part, especially to the vibration direction of the moving part, in the first interface section. It surprisingly turned out, that such an alignment of the tool tip relative to the vibration direction and particularly avoiding a threated section, being intended for screwing the tool tip to the moving part, allows to transfer or convert the vibration movement of the moving part to the tool tip in a more efficient way, especially compared to those tips including such a threated section for connecting the tool tip to the moving part. In particular, the tool avoids a threated section that typically extends along the vibration direction in the prior art, in particular at the front end of the tool tip, facing away from the pointed tip of the instrumental tool tip, i. e. at the proximal end of the tool tip. In particular, it is provided that the tool has a first interface section between the tool tip and the moving part, said first interface section being free of a screwing mechanism. Especially, the tool tip and the moving part form an angle in the first interface section, i. e. in the section of being connected to each other. In particular, the angle between the extending direction of the tool tip and the moving part is a result of the form of the interface and no result of a course of the moving part or the tool tip itself. In particular, the moving part itself represents a sonotrode or horn or is at least connected to the sonotrode or horn, for example by a screwing mechanism in the second interface section. Furthermore, the tool is preferably provided for an external treatment, in particular for an outer surface of an implant, and/or, especially, the tool tip performs a flexural motion movement and no rotational movement. In the vibrating state the tool tip, for example, performs a flexural motion, in particular in a plane extending along the extension direction of the tool tip and perpendicular to the cross section of the tool tip. For example, the performed vibration of the tool tip is small. For instance, the amplitude is smaller than 100 µm (max displacement peak). In the non-vibrating state, no vibration is transferred to the tool tip, but preferably the tool tip is connected to the moving part. Particularly, in the first interface section, the tool tip extends in an extending direction being slanted to the vibration direction in the non-vibrating state, i.e. when the tool tip is connected to the moving part and is not actuated to vibrate.

Furthermore, it is possible by using the first interface section as mentioned above to reduce the dimensions of the handpiece, since the vibration source can be dimensioned smaller. As a consequence, it is possible to provide a tool being much easier to handle by an operator. Especially, the dimensions of the tool can be reduced, since for having the same efficiency the ultrasound vibration source can be dimensioned smaller compared to those tools known from the prior art. This is another benefit of making the energy transfer between the moving part and the tool tip more efficient.

In particular, it is provided that a connection between the moving part and the tool tip is waterproof to avoid having a sporous waterjet.

Furthermore, it is preferably provided that the vibrational direction mainly corresponds to a longitudinal direction of the handpiece, i.e. a direction along that the handpiece extends. Preferably, it is provided that the moving part has a first length measured between a proximal front-end being connected to the vibration source and a distal front-end being opposite to the (ultrasound) vibration source. Especially, the tool tip has a third length, being smaller than the first length.

As a consequence, it is possible to avoid oversizing handpieces in weight and dimensions. Since the weight of the tool is decreased, it is advantageously possible to reduce a probability for creating a musculoskeletal disease of the operator. Furthermore, it has been shown that oversized diameters or dimensions of handpieces encourage operators to apply excessive forces on the implant and thus creates iatrogenic damages. This can be avoided by reducing the dimensions of the handpiece, which is allowed due to the more efficient transfer of the energy from the moving part to the tool tip.

In particular, the comparably large first length allows placing the distal front-end of the moving part being faced away or being opposite to the ultrasound vibration source as close as possible to the implant. This further reduces losses in energy during operation. Furthermore, it is advantageously possible to simplify the manufacturing process of realizing the tool tip, because a complicated bending method as well as a cutting mechanism can be avoided.

Preferably, it is provided that in the operating state and/or mounted state the tool tip reaches in and/or through a recess of the moving part. Particularly, the moving part, in particular at its distal front end, more precisely the end being located opposite to the vibrational source, includes a recess or an opening in that the tool tip can be inserted for being mounted. Preferably, the moving part has a recess that is slanted compared to the vibration direction. Especially, the recess is orientated such that the recess defines the orientation of the extending direction of the tool tip in the mounted state, i. e. in the mounted state the general course of the tool tip extrapolates the general course of the recess. Preferably, the proximal end of the tool tip, forming an inserting section, is configured for being inserted into the recess and, for example, reaches through the recess in the moving part, preferably in form of a bore or an opening, for example a through bore or a blind hole, especially such that the proximal end of the tool tip is flush with an outer surface of the moving part in the mounted state, in particular opposite to the pointed tip of the tool tip or at the proximal end of the tool tip.

In a preferred embodiment it is provided that in the operating state, the tool tip is connected to the moving part by a frictional connection and/or by a form fitting connection, without a screwing mechanism. Preferably, the tool tip is connected to the moving part by a press fit connection. Further, it is conceivable that the strength of the press fit connection defines, whether the tool tip can be removed or whether it is permanently connected to the moving part. It is even conceivable that the first interface section includes a bayonet lock for connecting the tool tip and the moving part. It is also thinkable that the inside of the recess has grooves that allows establishing a form fitting connection between a tool tip and the moving part, in particular in a direction parallel to the extending direction. In an alternative embodiment it might be even conceivable that an additional mounting element, such as a screw is provided for being inserted into the moving part such that the mounting element supports fixing the tool tip to the moving part, by acting on the tool tip, in particular on its inserted section or inserting section.

In particular, it is provided that the tool tip comprises a groove section. Preferably the groove section is formed by at least one groove or slit, which extends circumferentially in a plane being perpendicular to the extension direction of the tool tip. It turned out that by the groove section it is advantageously possible to further improve the oscillation properties and the impedance of the plastic tool tip. In particular, it is provided that the tool tip has a cross section in the groove section, measured in a plane being perpendicular to the extension direction, being smaller as a maximum cross section of the tool tip. Preferably the maximum cross section is assigned to the section of the tool tip being used for connecting the tool tip to the moving part of the tool.

Particularly, the tool tip has a constant cross section, measured in a plane being perpendicular to the extending direction, within or along the groove section. In other words: a single groove is formed and the tool tip has a cylindrical shape in the groove section.

In particular, it is provided that the groove section is adjacent to the moving part, when the tool tip is in the operating state. Especially, it is provided that the groove section is arranged directly next to a section of the tool tip being completely incorporated into the recess of the moving part, the recess being intended to create the interface between the tool tip and the moving part.

Especially it is provided that the groove section extends over a groove length along a direction being parallel to the extending direction, wherein the tool tip extends over a third length, wherein a ratio of the groove length to the third length is between 0.1 and 0.3, preferably between 0.1 and 0.25 and most preferably between 0.1 and 0.18. Those geometries turned out to be of further advantage with respect to the vibrational behaviour and the impedance of the tool tip, when operated.

Preferably, it is provided that:
- the tool tip is exchangeable or permanently connected to the moving part and/or
- the moving part is exchangeable or permanently connected to the ultrasound source of the handpiece.

In case of a permanent connection, it can be avoided that unsuitable tool tips are connected to the moving part. This reduces the probability of damages at the implant during operation. Furthermore, it is advantageously possible to adapt the handpiece, especially the ultrasound vibration source to the specific design of the tool tip. As a consequence, an oversizing of the handpiece can be avoided and the ultrasonic motor, for example in form of piezo electric transducers, can be designed smaller. As a consequence, this has direct influence on the ergonomic benefits for handling the tool and increases the comfort of the operator. As a consequence, less damages at the implant are produced. In case of an exchangeable or interchangeable tool tip and/or moving part it is advantageously possible to just remove the tool tip, especially when the tool tip is worn after several time of use. Thus, only the handpiece and/or the moving part have to be sterilized for the next treatment. It is also conceivable to switch between a tool tip for a dental treatment, such as a scaler, and the tool tip intended for cleaning implants. In this case dental implants and tooth can be treated by the same ultrasonic device.

Furthermore, it is provided that the tool tip has a polygonal cross section in a plane, perpendicular to the extending direction, and/or tapers along its extending direction. Especially the pointed tip, caused by the tapered design of the tool tip, allows improvements of removing the dental calculus during the operation. Preferably, a ratio between a length of a tapered section of the tool is between 0.5 mm and 10 mm, preferably between 1 and 6 mm and more preferably between 2 and 4 mm. Furthermore, it is provided that the tool tip has at least a polygonal, for example rectangular, cross section in the inserting section that is inserted into the recess in the mounted state. As a consequence, it is possible to realize a key lock system that allows only a specific type of tool tips to be inserted into the recess. As a consequence, the handpiece can be individualized for specific types or specific kinds of tool tips, allowing optimizing the handpiece, especially the ultrasound vibration source being optimized, preferably regarding its dimension, for the specific types.

Preferably, the moving part has a tapered section having a reduced diameter measured in a plane perpendicular to the vibration direction, in particular in comparison to the diameter of the moving part being adjacent to the vibration source. Such a tapered section is preferably arranged directly next to the recess that is intended for receiving the tool tip in the mounted state. The tapered section concentrates the translation of vibration movement to the first interface section, which connects the tool tip and the moving part. The ratio of the length of the tapered section of the moving part to the first length, i. e. the total length of the moving part is between 0.0125 and 0.3, preferably between 0.031 and 0.15 and most preferably between 0.05 and 0.10.

In particular, it is provided that the moving part includes a cylinder-like section in the first interface section, wherein the cylinder-like section comprises the recess for receiving the tool tip. In other words: the distal end of the moving part, in particular of the sonotrode of the transducer, is formed as a cylinder-like section. A symmetry axis of such a cylinder-like section is orientated parallel and preferably concentric to the extending direction of the recess or the non-bended tool tip in the mounted state. Furthermore, it is conceivable that the moving part includes a shaft section in addition to the cylinder-like section at the distal end of the moving part. The shaft section has preferably a reduced cross section in a direction being perpendicular to the vibration direction. For example, the shaft section is formed by two flat surfaces being parallel to each other. The parallel surfaces simplify handling during inserting the tool tip into the recess, since the moving part can be gripped in a simpler manner. The ratio of the distance between the two parallel surfaces is smaller than an outer diameter of the cylinder like section. In particular, a ratio of the distance to the outer diameter is between 0.5 and 0.9, preferably between 0.6 and 0.8 and more preferably between 0.7 and 0.78. Such a slim shaft section reduce the probability that the shaft blocks the view to the tool tip during operation, in particular to a treatment zone. Furthermore, the configuration of the cylinder like section and the shaft section can simple be manufactured by milling. The shaft section extends preferably to the handpiece, i. e. in a region being outside of a hosing forming the handpiece. Another benefit of the cylinder-like section is avoiding any coupled lateral mode and therefore guaranteeing a better control of the vibration direction. Since the operator has direct visual access to the tip, he is directly informed about the vibration direction. As a result a safer treatment for the patient can be guaranteed, resulting in a low invasive treatment and less or no pain.

Especially, it is provided that the moving part includes a ball or cylinder-like section in the first interface section, wherein the ball-like section comprises a recess for receiving the tool tip. By using a ball-like section, it is advantageously possible to avoid injuries at the inside of the oral cavity. Furthermore, the ball-like section increases again the diameter of the moving part along the vibration direction at its front and is located opposite to the ultrasound vibration source. Especially, reducing the diameter of the moving part, especially at the rear end of the moving part, i. e. the end being located opposite to the vibration source, reduces the weight of the moving part. In particular, it turned out that the cylindrical shape or the rear end or the moving part improves the ergonomics and the tool tip fixation.

In another embodiment it is provided that the moving part is made from titanium, preferably the ultrasonic horn is titanium (Ti₆L₄V) or aluminum (7075 T6). Thus, a material is used to be light compared to the countermass (stainless steel), having high elastic properties, good sound propagation (high resonator behavior, high quality factor) and a compatible celerity with ceramics used and back mass material. It needs to be biocompatible, in particular the fluid channel and /or an external contact. Furthermore, it is provided that an angle between the vibration direction of the moving part and the extension direction of the tool tip is between 90° and 150°, preferably 100° and 140° and most preferably between 110° and 130°.

In another embodiment, it is provided that the ratio between a second length assigned to a length of the vibration source, measured in the vibration direction, to the first length assigned to the moving part, measured in the vibration direction, is between 0.025 and 0.5, preferably between 0.04 and 0.13 and most preferably between 0.05 and 0.1. Thus, it is advantageously possible to provide a short and compact tool, being easy to handle for the operator. Especially, the first length L1 depends on the frequency and the transducer configuration and, for example for titanium material, has a value between 20 and 80 mm, preferably between 30 and 70 mm and more preferably between 40 and 60 mm. Furthermore, it is preferably provided that the second length L2 has a value between 1 and 15 mm, preferably between 2 and 8 mm and most preferably between 3.5 and 7.5 mm

In particular, it is provided that the moving part of the handpiece is a multi-part-system. Such configuration allows to remove or interchange the whole section including the tool tip and the moving part, i.e. the tool tip and the moving part can be removed or exchanged, whereas the handpiece, including the ultrasound vibration source, can be used several times. In particular, the moving part and the handpiece are connected to each other in a second interface section, preferably by screwing.

Another subject matter of the present invention is a tool tip for a tool according to the present invention, wherein the tool tip is made from plastic. All the benefits and specifications mentioned in the context of the tool applies analogously to the tool tip and vice versa.

Another subject matter of the present invention is a system comprising a tool for cleaning an implant and/or a tooth, the tool being configured according to one of the preceding claims, wherein the system comprises a set of tool tips, which can be interchangeable attached to the moving part. All specifications and benefits being discussed in context of the tool applies analogously to the system and vice versa. As a result it is possible to use the tool for both a dental treatment and for cleaning an implant. Preferably the tool tip for the dental treatment forms a scaler and is made from a material different from plastic. Especially, the tool is used in that case for a dental treatment, in particular as scaler for removing dental calculus. Such a tool uses a vibration movement, in particular an ultrasound vibration movement for moving a tool tip such that the tool tip, located at or next to dental calculus at a tooth, removes said dental calculus from the tooth being treated during operation.

Another subject matter of the present invention is a handpiece and/or a moving part of the tool according to the present invention. All benefits and specifications described in the context of the tool applies analogously to the handpiece and the moving part and vice versa.

Another subject matter of the present invention is a method for manufacturing a handpiece and/or moving part and/or tool tip including a first interface section of the tool according to the present invention. All the specifications described in the context of the tool applies analogically to the method and vice versa.

Another subject matter of the present invention is an use of the tool according one of the preceding claims, wherein the tool is used to treat an implant. All the specifications described in the context of the tool applies analogically to the use and vice versa.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically illustrates a tool for medical treatment according to a first preferred embodiment in a side view,
- **Fig. 2**: schematically illustrates the tool for medical treatment of figure 1 including a handpiece in a perspective view,
- **Fig. 3**: schematically illustrates the tool for medical treatment of figure 1 including a handpiece in another side view,
- **Fig. 4**: schematically illustrates the tool for medical treatment of figure 1 including a handpiece the side view,
- **Fig. 5**: schematically illustrates in detail an first interface section of the tool for medical treatment of figure 1 in a side view,
- **Fig. 6**: schematically illustrates a moving part for a tool according to a second preferred embodiment in a cross-sectional view,
- **Fig. 7**: schematically illustrates the moving part of Fig. 6 in two perspectives views,
- **Fig. 8**: a tool tip according to a preferred embodiment of the present invention,
- **Fig. 9**: a detailed view on the recess and the outlet channel of the moving part,
- **Fig. 10**: schematically illustrates a distal end of a tool according to a third preferred embodiment of the present invention in three perspective views,
- **Fig. 11**: schematically shows a manufacturing step for producing a moving part of the tool of fig. 10 and 12 and
- **Fig. 12**: schematically shows a tool tip and the moving part according to a fourth preferred embodiment of the present invention.

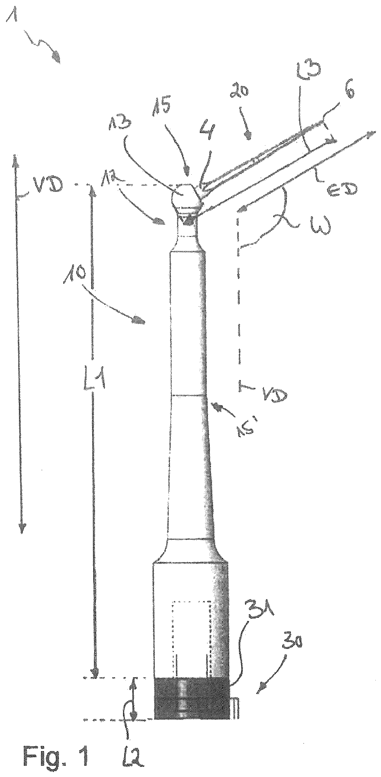

In **Figure 1** schematically a tool 1 for cleaning implants according to a first preferred embodiment is shown in a side view. Especially, figure 1 illustrates a tool 1 for cleaning an implant. Such a tool 1 uses a vibration movement, in particular an ultrasound vibration movement for moving a tool tip 20 such that the tool tip 20, located at or next to a contamination or dirt at the outside of the implant, removes said adhered contamination or dirt. Preferably, the tool 1 includes a vibration source 30, in particular an ultrasound vibration source, being intended to cause the ultrasound vibration movement along a vibration direction VD. Especially, the vibration source 30 includes at least one piezo element 31. These piezo elements 31 are typically configured such that an electrical energy can be translated to a small expansion of the piezo element 31 in vibration direction VD that creates the ultrasound vibration movement.

In particular, it is provided that the tool 1 further comprises a moving part 10 and a tool tip 20. In particular, the moving part 10, forming a tip holder, preferably represents a sonotrode or horn. Thereby, the tool tip 20 represents in figure 1 the component that interacts with a surface of the implant, in particular its outside, during a treatment. Especially, the tool tip 20 is formed as a non-bent component. In other words: the tool tip 20 in form of a needle, i. e. the tool tip 20 has a straight course along the extension direction ED from an inserting section, being inserted into a recess 17 in the first interface section 15, to a pointed tip or distal end 6 of the tool tip 20. As a consequence, the tool tip 20 differs from the scaler tips known by the prior art for cleaning surface of teeth, the scaler tips being typically bent for meeting the requirement that the rear end (seen from the vibration source) or distal end of the tool tip 20 needs to be extended slanted about an angle W of about 120° to the vibration direction VD, in particular for meeting the requirements that are defined by an oral cavity geometry.

However, instead of using a screw section, which allows connecting the tool tip 20 to the moving part 10 by a screw mechanism, it is provided according to the embodiment shown in figure 1 to connect the tool tip 20 to the moving part 10 in an first interface section 15, in particular without a screwing mechanism. Preferably, the tool tip 20 is connected to the moving part 10 in the first interface section 15 by a frictional-fitting and/or form-fitting, in particular without a screwing mechanism.

Especially, the tool tip 20 is connected to the first interface section 15 of the moving part 10 by a press fit connection. Depending on a strength of the press fit, the tool tip 20 is arranged or connected to the moving part 10 permanently or non-permanently, for example.

Furthermore, it is provided that the tool tip 20 is inserted into a recess 17, wherein the recess 17 is included in the moving part 10. Thereby, the tool tip 20 extends in an extending direction ED being slanted to the vibration direction VD in the first interface section 15. It turned out that by connecting a non-bent tool tip 20 such to the moving part 10 that the tool tip 20 extends slanted to the vibration direction VD of the moving part 10, it is possible to transfer the vibrational movement from the moving part 10 to the tool tip 20 in a more efficient way, compared to those tool tips having a screw section for screwing the tool tip 20 to the moving part 10 of the tool. Furthermore, it turned out to be of advantage to use a tool tip being made at least partially, preferably completely from plastic. As a result the vibrations being generated and the impedances are sufficient to use the tool for cleaning implants.

Preferably, the extending direction ED and the vibration direction VD of the tool 1 having the non-bent tool tip 20 form an angle W that mainly corresponds to 120°, for meeting the requirements for optimized oscillation to remove dirt or contaminations from the surface of the implant.

Preferably, it is provided that the tool 1 has a first length L1 between a front end of the vibration source 30 and a front end of the moving part 10 being faced away from the vibration source 30, measured along the vibration direction VD. Due to the connection by a press fit in the first interface section 15, it is possible to decrease a third length L3 of the tool tip 20 along the extending direction ED and/or a second length L2 of the vibration source 30 along the vibration direction VD. As a consequence, it is possible to locate the front end of the moving part 10 facing away from the vibration source 30 closer to the implant during the treatment. This makes the energy transfer for removing the dirt or contamination even more efficient.

Preferably, a ratio of the second length L2 to the first length L1 is between 0.025 and 0.5, preferably between 0.04 and 0.13 and most preferably between 0.05 and 0.1. Especially, the first length L1 depends on frequency and transducer configuration and has value between 20 and 80 mm, preferably between 30 and 70 mm and more preferably between 40 and 60 mm. Furthermore, it is preferably provided that the second length L2 has a value between 1 and 15 mm, preferably between 2 and 8 mm and most preferably between 3.5 and 7.5 mm. Preferably, the third length L3 depends on the application. For example the third length is 20 mm for. Furthermore, reducing the second length L2, in particular compared to the first length L1, it is advantageously possible to produce a more compact and smaller handpiece 40 for the tool 1 that allows a much easier handling for an operator.

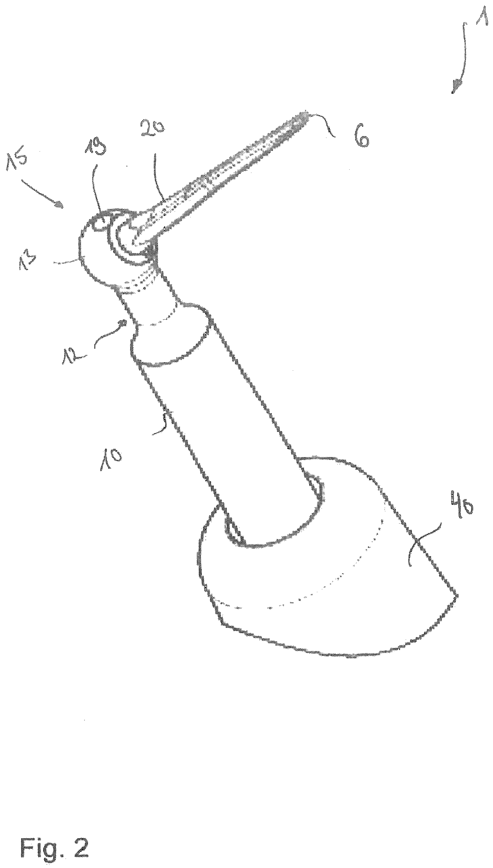

In **Figure 2****,** the tool 1 for cleaning an implant of figure 1, including a handpiece 40, is shown in a perspective view. As it is illustrated, the moving part 10 reaches through a hole in a region at the rear end of the handpiece 40. In particular, it is provided that the handpiece 40 at least partially surrounds the moving part 10 of the tool 1. For example, it is also conceivable that the moving part 10 is a multipart-system having second interface section 15' that allows removing at least a part of the moving part 10 from another section being permanently connected to the vibrational source 30.

Furthermore, it is shown in Figure 2 that the needle-like, non-bent tool tip 20 tapers to its distal end 6. Furthermore, it is preferably provided that the tool tip 20 has a polygonal cross section in a plane perpendicular to the extending direction ED. For example, the cross section has a rectangular form. Furthermore, it is provided that at its rear end, i. e. its proximal end 4, the tool tip 20 has an inserting section. This inserting section is intended to be inserted into a recess 17 of the moving part 10 in a mounted state such that the tool tip 20 is connected to the moving part 10 by a press fit.

Preferably, the first interface section 15 is configured as a lock and key principle that allows only those tool tips 20 to be connected to the recess 17 that have the same cross section in the inserting section that corresponds to the form of the recess 17 of the moving part 10, in particular in the first interface section 15. Furthermore, it is provided that the recess 17 is part of a section 13 of the moving part 10 that forms the rear end of the moving part 10, particularly being faced away from the ultrasound source 30. Furthermore, an additional opening 19 is provided at the front-end of the moving part 10 being faced away from the ultrasound vibration source 30. Such an additional opening 19 allows access, in particular visual access, to the inserting section of the tool tip 20 being inserted into the recess 17. As a consequence, it is possible to identify the used tool tip 20, when the tool tip 20 is marked, for example by a colour, such that it is possible to visually identify whether the proper tool tip 20 is arranged inside the recess correctly. Alternatively or additionally it is possible to use this opening 19 for fastening or fixing the tool tip 20 to the moving part 10 or support the press-fit connection by an additional means for fixation, such as a screw reaching through the opening 19, for example.

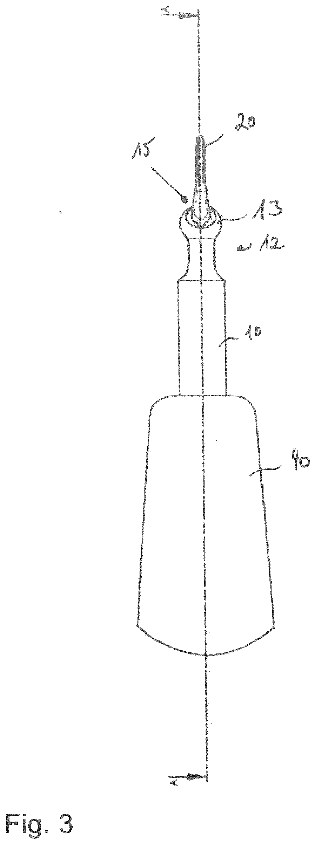

The tool 1 for cleaning the implant in figure 1, including a headpiece 40 is shown in another side view in **Figure 3**. In particular, it is shown that the moving part 10 has a tapered section 12, being located preferably directly next to a ball- or cylinder-like section 13. Such a design of the moving part 10, in particular at its rear end (seen from the vibration source 30), allows concentrating the vibrational movement, caused by the vibration source 30 to the first interface section 15 for a most efficient transfer of the movement energy from the moving part 10 to the tool tip 20.

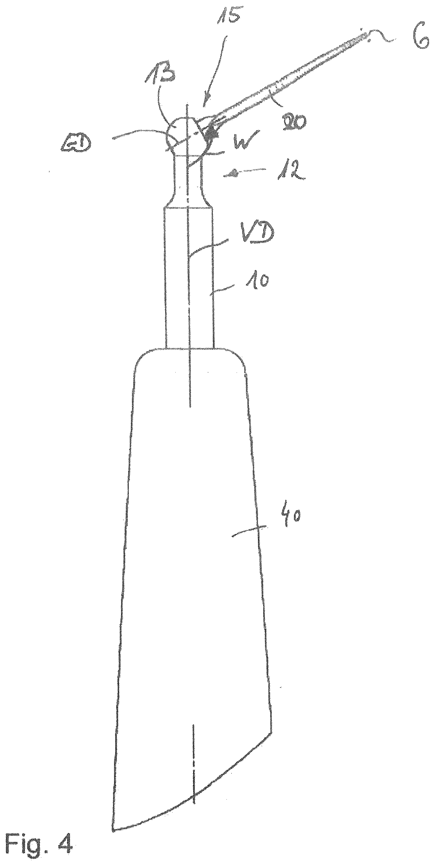

In **Figure 4**, the tool 1 for medical treatment of Figure 1, including the handpiece 40 is shown in the side view. It is shown that the handpiece 40 tapers along the vibrational direction VD from a proximal end to a distal end.

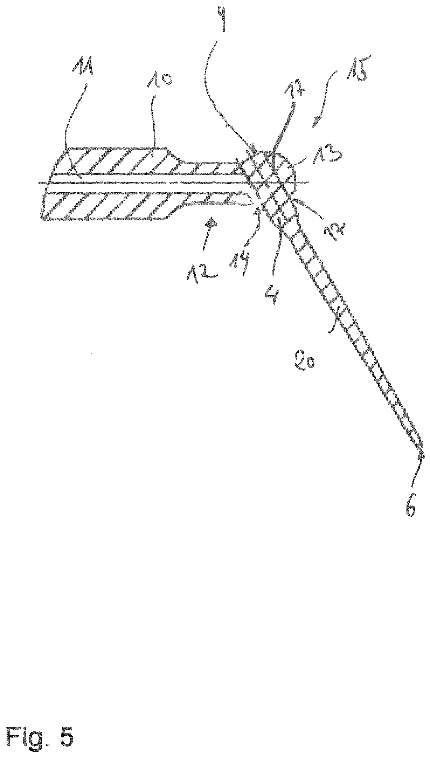

In **Figure 5**, in detail the first interface section 15 of the tool 1 for medical treatment of figure 1 is shown in a side view. In particular, it is provided, that the tool tip 20 reaches through a recess 17 that is included in the ball- or cylinder- like section 13 of the rear end of the moving part 10. In particular, it is provided that the recess 17 is slanted relative to the vibration direction VD and defines the direction of the tool tip 20, i. e. the extending direction ED of the tool tip 20 being inserted in the recess 17. Furthermore, it is provided that the tool tip 20 includes a fluid channel 11, being located inside of the moving part 10, the fluid channel 11 preferably allowing the transport of the fluid, preferably a liquid, more preferably water, from the handpiece 40 to an outlet 14 located, for example, in the first interface section 15 of the tool 1 or another outlet (not shown) at the distal end 6 of the tool tip 20. Particularly, the outlet 14 is located directly next to the recess 17 or is even part of the recess 17 that is used for connecting the tool tip 20 to the moving part 10 by a press fit.

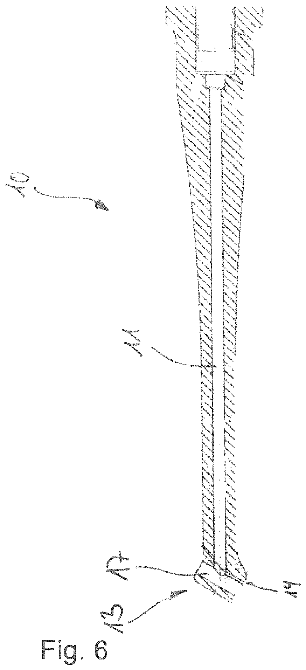

In **figure 6**, schematically a moving part 10 for a tool 1 according to a second preferred embodiment in a cross-sectional view is shown. The moving part 10 illustrated in figure 6 mainly differs from the moving part 10 of the tool 1 shown in the figures 1 to 5 by using a cylinder-like portion 13 that forms the rear end of the moving part 10. Furthermore, it is provided that the fluid channel 11 is larger than the outlet channel 18. In particular, the cross section of the fluid channel 11, measured in a plane perpendicular to the stream direction, is at least twice, preferably at least three times and most preferably at least four time bigger than the cross section A of the outlet channel 18, measured in a plane perpendicular to the stream direction.

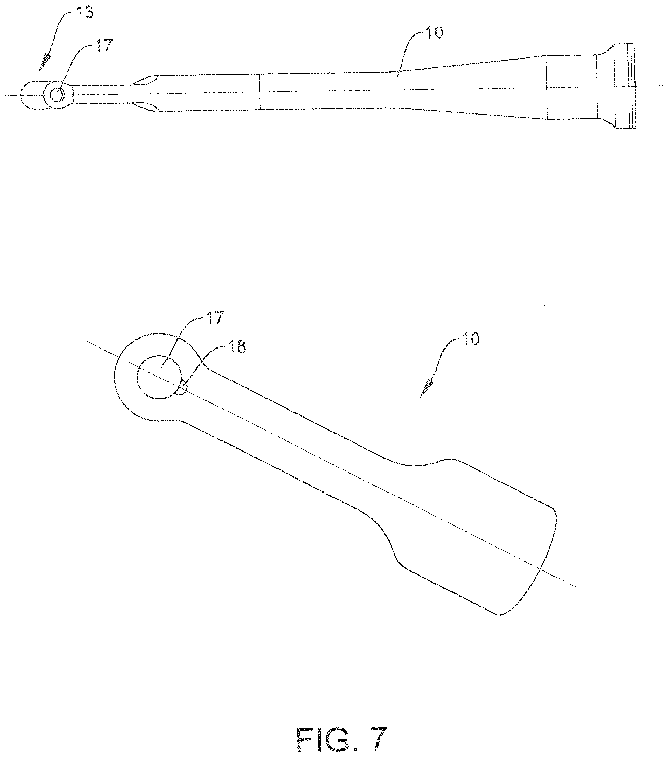

**Figure 7** shows the moving part 10 of figure 6 in two perspective views. In particular, the cylinder-like portion 13 of the moving part 10 includes a recess 17 for receiving the tool tip 20. In particular, the perspective in the lower illustration shows both the recess 17 and the outlet channel 18 in a top view.

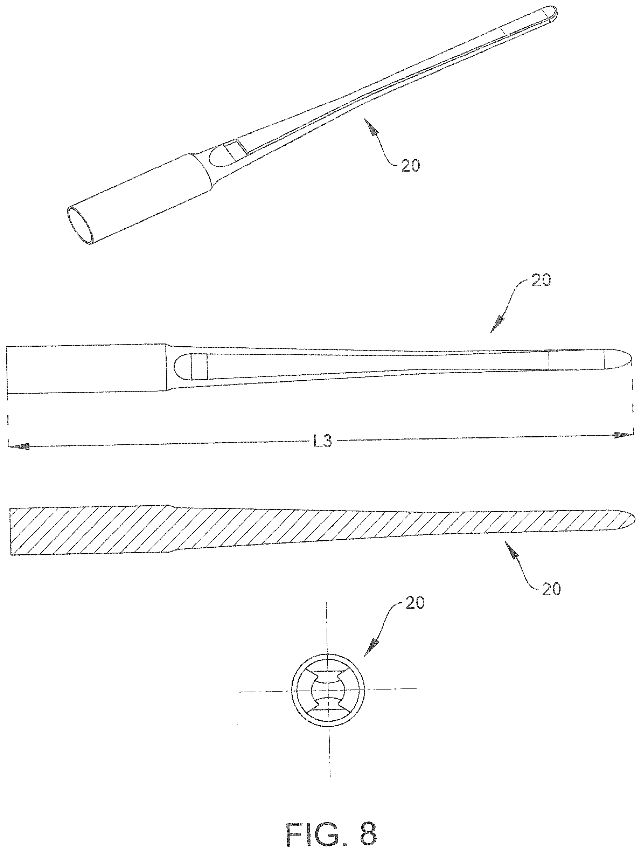

**Figure 8** shows a tool tip 20 for the moving part 10 according to the first or second embodiment of the present invention in different perspectives. In particular, it is provided that the tool tip 20 is formed at least partially by a flat, straight tool tip 20 or needle.

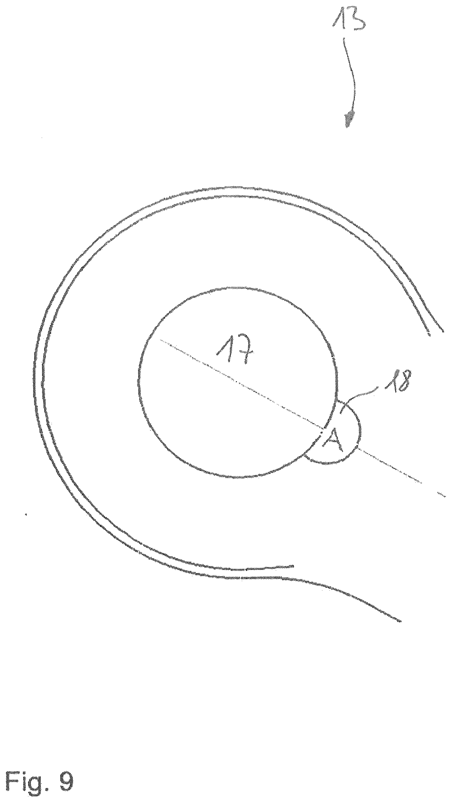

**Figure 9** shows a detailed view on the outlet 14 and the recess 17 of the moving part 10. In particular, figure 9 illustrates the cross section A of the outlet channel 18 of the moving part 10. In particular, the cross section A of the outlet opening 14 and/or the outlet channel 18 is smaller than 0.8 mm² or between 0.05 and 0.78 mm², preferably between 0.05 and 0.39 mm² and most preferably between 0.05 and 0.15 mm² or even about 0.1 mm²

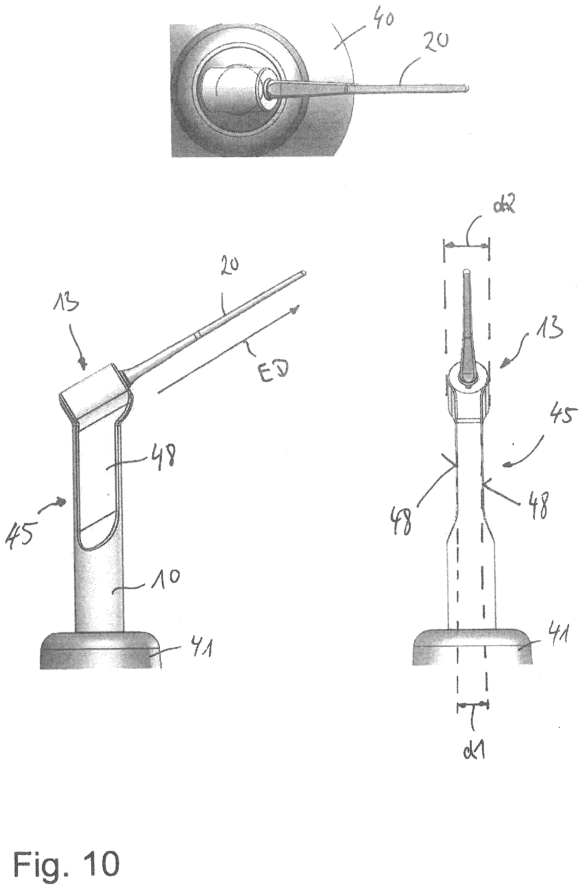

In **figure 10** a distal end of a tool 1 according to a third preferred embodiment is illustrated in three perspective views. The third embodiment mainly corresponds to the second preferred embodiment shown in the figures 6 and 7. Especially, the moving part 10 of this tool 1 includes a cylinder like section 13 at its distal end. Further, the moving part 10 includes a shaft section 45. The shaft section 45 extends at least half of the spacing between the cylinder like section 13 and a housing 41 of the handpiece. The shaft section 45 preferably has a reduced cross section and more preferably includes two flat surfaces 48 being parallel to each other and spaced from each other by a distance d1. In particular, a ratio of the distance d1 to an outer diameter d2 of the cylinder-like section of the moving part 10 is between 0.5 and 0.9, preferably between 0.6 and 0.8 and more preferably between 0.7 and 0.78. Such a slim shaft section 45 reduce the probability that the moving part 10 blocks the view of the operator to the tool tip 20 during operation, in particular to a treatment zone and the vibrating tool tip 20.

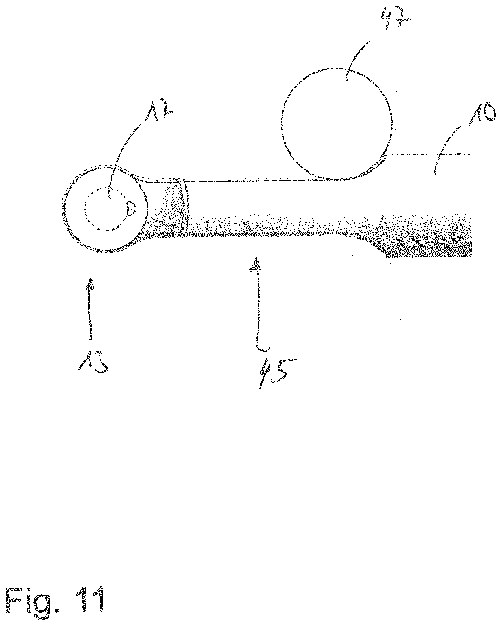

**Figure 11** shows a manufacturing step for producing a moving part 10 of the tool 1 of fig. 10. Especially, it is possible in case of a configuration, having a shaft section 45 and a cylinder-like section 13 at the distal end of the moving part 10 to use a machining process such as milling to create the corresponding outer contour of the moving part 10 at its distal end. Thus it is possible to create the parallel orientated flat surfaces 48 and the cylinder-like section 13, having a symmetry axis being parallel to an axis being slanted about 120° relative to the vibration direction VD and/or parallel to the extending direction ED of the tool tip 20 or the recess 17 for receiving the tool tip 20, in a simple manner. Especially, the manufacturing process can be simplified and accelerated, and as a result the cost for manufacturing the moving part 10 can be reduced. Actually, the circle in figure 11 illustrates a milling tool 47, which is used for creating the contour of the moving part 10 of figure 10. Especially, it is provided that the milling tool 47 is orientate about 120° to an extending direction of a rod, which is about to be processed to form the moving part 10. By a relative translation movement along the corresponding path (during the rotating movement of the milling tool for machining), automatically the orientation of the cylinder-like section 13 is created. And the end section of the shaft section 45 is slanted correspondingly.

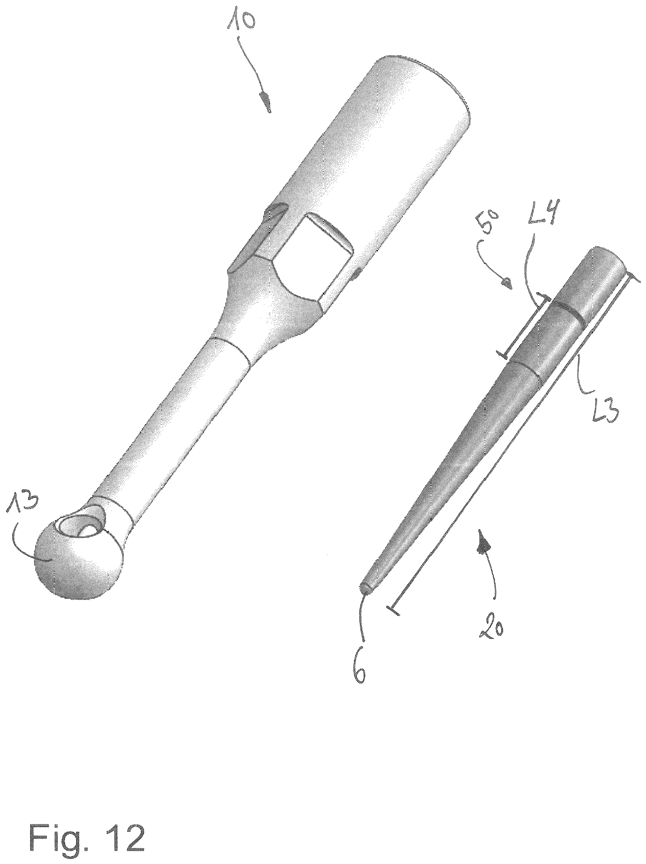

In **figure 12** a fourth exemplary embodiment of the present invention is shown. In particular figure 12 shows a moving part and the tool tip 20 in an unassembled state. Especially the tool tip 20 includes a groove section 50. When inserted in the moving part 10, the groove section 50 is arranged adjacent to the moving part 10. In other words. The groove section 50 is arranged in a part extending from the moving part 10, the part facing the moving part 10. In particular, it is provided that the groove section 50 is formed by a groove or slit extending circumferentially around the tool tip 20 in a plane being perpendicular to the extension direction ED. Moreover, it is provided that the groove section 50 extends over a groove length L4 along a direction being parallel to the extending direction ED, wherein the tool tip 20 extends over a third length L3, wherein a ratio of the groove length L4 to the third length L3 is between 0.1 and 0.3, preferably between 0.1 and 0.25 and most preferably between 0.1 and 0.18.

### Reference numbers:

- 1: tool
- 4: proximal end
- 6: distal end
- 10: moving part
- 11: fluid channel
- 12: tapered section
- 13: ball-like or cylinder like section
- 14: outlet
- 15: first interface section
- 15': second interface section
- 17: recess
- 18: outlet channel
- 19: opening
- 20: tool tip
- 30: vibration source
- 31: piezo element
- 40: handpiece
- 41: housing
- 45: shaft section
- 47: milling tool
- 48: flat surface
- 50: groove section
- d1: distance
- d2: outer diameter
- VD: vibration direction
- ED: extending direction
- W: angle
- L1: first length
- L2: second length
- L3: third length
- L4: groove length

## Claims

1. A tip holder for holding a medical tool tip (20) for cleaning an implant or a tooth, the tip holder comprising
- a moving part (10) extending between a first interface section (15) and a second interface section (15'), the moving part (10) being configured to perform a vibration movement, along a vibration direction (VD) in a vibration state, when attached to a handpiece (40),
wherein the first interface section (15) is configured to secure a tool tip (20) by frictional connection and
wherein the second interface section (15') is configured to attach the tool (1) to the handpiece (40) having a vibration source (30) emitting vibration in a vibrating mode.

2. The tip holder according to claim 1, wherein the second interface (15') comprises a thread being configured to screw the tool tip (1) to the handpiece (40).

3. The tip holder according to claim 2, wherein the second interface (15') is configured to screw the handpiece (40) along the vibration direction (VD).

4. The tip holder according of one of the preceding claims, wherein the first interface section (15) includes a cylinder - like or ball-like section (13), comprising a recess (17) for accommodating the tool tip (20).

5. The tip holder according to one of the preceding claims, wherein the moving part (10) comprises a fluid channel (11) configured to deliver a fluid from the handpiece (40) to the tool tip (20).

6. The tip holder according to one of the preceding claims, wherein the moving part (10) forms a shaft, the fluid channel (11) being located along an axis of the shaft.

7. A tip holder according to one of the preceding claims, wherein the fluid channel (11) comprises a fluid outlet located in the first interface section (15)

8. A tip holder according to one of the preceding claims, wherein the first interface section (15) is configured to attach the tool tip (20) in a slanted direction with respect to vibration direction (VD).

9. A tool tip (20) comprising a tip portion and an attachment portion being configured to be secured by a frictional connection in a first interface section (15) of a tip holder according to claims 1 to 8.

10. The tool tip (20) according to claim 9, wherein the tool tip (20) is made at least partially from plastic.

11. A medical tool (1), comprising a tool tip (20) according to claim 9 or 10 and a tip holder according to one of the claims 1 to 8, the attachment portion being secured into the first interface section (15).

12. The medical tool (1) according to claim 11, further comprising the handpiece (40) attached to the second interface section (15').

13. The medical tool (1) according to one of the claims 11 or 12, wherein in the operating state the tool tip (20) is connected to the moving part (10) by a press fit connection.

14. The medical tool (1) according to one of the claims 11 to 13, wherein an angle (W) between the vibration direction (VD) of the moving part (10) and the extending direction (ED) of the tool tip (20) is between 90° and 150°, preferably 100° and 140° and most preferably between 110° and 130°.

15. The medical tool (1) according to one of the claims 11 to 14, wherein the medical tool is configured to clean an implant.
